# EUROPÄISCHE PATENTSCHRIFT

(11) **EP 4 147 332 B1**
(45) Veröffentlichungstag und Bekanntmachung des Hinweises auf die Patenterteilung: **14.02.2024**
(21) Anmeldenummer: 21752508.8
(22) Anmeldetag: 20.07.2021
(51) Int. Cl.: F04D 25/08, F04D 29/58, H02K 5/18, H02K 9/06, F04D 29/42

(54) **ELEKTRODYNAMISCHE ROTATORISCHE MASCHINE MIT EIGENLÜFTUNG**
ELECTRODYNAMIC ROTARY MACHINE WITH INTERNAL VENTILATION
MACHINE ROTATIVE ÉLECTRODYNAMIQUE À AÉRATION PROPRE

(30) Priorität: 26.08.2020 EP 20192910
(43) Veröffentlichungstag der Anmeldung: 15.03.2023
(73) Patentinhaber: Innomotics GmbH, 90441 Nürnberg (DE)
(72) Erfinder: BÜTTNER, Klaus, 97618 Hollstadt (DE); GRILLENBERGER, Reiner, 91575 Windsbach (DE); KATZENBERGER, Tobias, 97631 Bad Königshofen STT Untereßfeld (DE); KIRCHNER, Klaus, 97645 Ostheim (DE); WARMUTH, Matthias, 97618 Windshausen (DE)
(74) Vertreter: Siemens Patent Attorneys
(86) Internationale Anmeldenummer: PCT/EP2021/070260
(87) Internationale Veröffentlichungsnummer: WO 2022/042949

(56) Entgegenhaltungen:
- EP-A1- 3 358 724
- CH-A- 158 635
- DE-A1-102015 121 695
- DE-T5-112017 007 480
- US-A- 3 226 580

## Beschreibung

Die Erfindung betrifft eine elektrodynamische rotatorische Maschine mit Eigenlüftung.

Das Belüftungskonzept derartiger Maschinen, beispielsweise eines Elektromotors ist üblicherweise aufgebaut mit einem auf einer Welle drehfest fixierten Lüfter und einer den generierten Luftstrom führenden Belüftungshaube. Kühlluft wird dabei durch ein Gitter der Belüftungshaube axial angesaugt und durch einen Radiallüfter nach außen geschleudert. Dadurch ergibt sich ein Druckaufbau an der Hauben-Innenwand. Es kommt zu einer axialen Umlenkung und Beschleunigung dieser Kühlluft in Richtung Maschinengehäuse. Die Kühlluft tritt aus der Haube aus und bewegt sich idealerweise innerhalb bzw. zwischen den Gehäuserippen entlang dem Gehäuse von der Belüftungsseite zur Antriebsseite.

Diese theoretische Betrachtung der Belüftung entspricht jedoch nicht der tatsächlichen Realität. Bereits nach Austritt aus der Haube entweicht Kühlluft radial aus dem Rippenbereich des Gehäuses und verliert somit die Kühlfunktion. Der Verlust der Kühlluft nimmt dabei im axialen Verlauf entlang der Rippen zur Antriebsseite stark zu, so dass der Anteil der Kühlluft, die auf der Antriebsseite noch eine Kühlwirkung entfaltet, sehr gering ist.

Durch die unzureichende Kühlfunktion wird die Maschine bzw. der Motor wärmer. Zudem ist die Temperatur auf AS (Antriebsseite) höher als auf BS (Belüftungsseite). Durch diesen axialen Wärmegradient innerhalb der Maschine kann die Maschine nicht voll ausgelastet werden. Ebenso stehen dabei vor allem die Lager der Antriebsseite unter erhöhtem thermischem Stress.

Zur Erreichung der geforderten Leistung oder des Wirkungsgrads der elektrodynamischen rotatorischen Maschine wird somit mehr Aktivteilvolumen spendiert. Teilweise kommt eine Fremdbelüftung zum Einsatz.

Die DE10 2015 121 695 A1 zeigt eine elektrische Maschine, deren Lüfterhaube Luftleitelemente aufweist, die einen zusätzlichen Kühlluftstrom bereitstellen.

Der Erfindung liegt somit die Aufgabe zugrunde eine elektrodynamische rotatorische Maschine mit Eigenlüftung zu schaffen, die einen verbesserten Einsatz der Kühlluft aufweist und somit eine kompaktere Bauweise gewährleisten kann.

Die Lösung der gestellten Aufgabe gelingt durch eine Elektrodynamische rotatorische Maschine gemäß des unabhängigen Anspruchs 1.

Erfindungsgemäß sind nunmehr an der Haube Mittel vorgesehen, die einen Kühlluftstrom entlang dem Gehäuse führen. Dabei wird zum einen der Kühlluftstrom derart geführt, dass er möglichst lange am Gehäuse entlang streift, zum anderen wird ein Zusatzkühlluftstrom bereitgestellt.

Diese Mittel weisen zumindest ein Luftleitelement auf, das einen Zusatzkühlluftstrom bereitstellt. Das Luftleitelement ist am Haubenaustritt vorgesehen, welches den Zusatzkühlluftstrom nach innen Richtung Maschinenachse richtet. Das Luftleitelement weist Öffnungen auf, die sich zwischen axial erstreckenden Stegen und dazwischen angeordneten Luftleitflächen ergeben. Dabei wird im Betrieb des Lüfters - und damit der elektrodynamischen Maschine, ergänzend zum Hauptkühlluftstrom nach dem Prinzip eines Injektors radial von außen Frischluft angesaugt bzw. der Zusatzkühlluftstrom generiert. Diese kühlere Luft, von außen kommend, wird vorzugsweise unter einem schrägen Winkel auf die Oberfläche des Gehäuses, insbesondere einen Kühlrippengrund (bei einem berippten Gehäuse) gefördert. Dies führt zu einer erheblichen Verbesserung der Kühlfunktion, die sich bis auf die Antriebsseite (AS) auswirkt, sodass sich der axiale Temperaturgradient innerhalb der Maschine reduziert.

Dabei ist das Luftleitelement so ausgebildet, dass es zu einer Vermischung mit der aus der Haube austretenden Kühlluft kommt. Damit steigert sich über die axiale Länge der Maschine betrachtet der Kühleffekt.

Durch den erfindungsgemäßen Aufbau der Haube kann die Kühlfunktion erheblich gesteigert werden, indem eine längere Verweildauer der Kühlluft an der Gehäuseoberfläche bzw. zwischen den Gehäuserippen erreicht wird.

Die Temperatur der gesamten elektrischen Maschine wird abgesenkt. Der Temperaturunterschied zwischen AS und BS wird reduziert. Wicklungs- und Lagertemperatur werden reduziert, wodurch Lebensdauer gewonnen wird. Der Wirkungsgrad der elektrodynamischen Maschine wird gesteigert.

Die Luftleitflächen verlaufen bzgl. der Achse schräg. Dies verbessert das Injektorprinzip und damit den Zusatzkühlluftstrom. Die Luftleitflächen sind vorzugsweise mit dem gleichen Winkel zur Achse versehen, es ist jedoch auch möglich den Luftleitflächen unterschiedliche Winkel bei der Fertigung des Luftleitelements zuzuweisen.

Des Weiteren folgen die Luftleitflächen der Kontur des Gehäuses, mit anderen Worten, die Krümmung der jeweiligen Luftleitflächen in Umfangsrichtung betrachtet, hat einen vom Durchmesser des Gehäuses abhängigen Radius.

Die Haube kann einstückig mit einer vorgebbaren Anzahl von Luftleitelementen ausgeführt sein. Unter einem Luftleitelement wird dabei ein umfänglich geschlossenes oder segmentiertes Teil verstanden. Ebenso sind diese Teile auch axial hintereinander anordenbar.

Eine einstückige Ausführung vereinfacht die Fertigung, da somit nur ein Teil "gehändelt" werden muss. Dieses eine Teil weist somit die Haube, ein oder mehrere Luftleitelemente, auf, wobei die Luftleitelemente jeweils Stege, Luftleitflächen und Öffnungen aufweisen.

Erfindungsgemäß ist das Luftleitelement in Umfangrichtung betrachtet segmentiert aufgebaut und mit der Haube lösbar befestigt. Die Haube und das oder die Luftleitelemente sind separate Teile, die je nach thermischem Bedarf der elektrischen Maschine nachträglich an der Haube anbringen lassen.

Um den thermischen Bedarf der elektrischen Maschine optimal abdecken zu können, weisen die Segmente der Luftleitelemente axial unterschiedliche Ausdehnungen und/oder unterschiedliche Anzahl von Öffnungen und/oder unterschiedliche Schrägung der Luftleitflächen auf.

Je nach thermischem Bedarf sind axial entlang des Gehäuses auch mehrere der segmentierten Luftleitelemente anordenbar. Beispielsweise werden somit an der Haube umfänglich vier oder sechs Segmente von Luftleitelemente angeordnet. Damit wird der gesamte Umfang beaufschlagt. Gerade bei axial kürzeren Maschinen steht für eine weitere axiale Verlängerung ggf. der Klemmenkasten im Wege, so dass lediglich auf dem verbleibenden Umfang weitere Luftleitelemente axial vorzusehen wären.

Die mechanische Verbindung zwischen Haube und Luftleitelemente, als auch zwischen den Luftleitelementen, insbesondere in axialer Richtung geschieht durch lösbare Clips- oder Schnappverbindungen.

Alternativ oder ergänzend dazu sind am axialen Ende der Haube (der AS-Seite zugewandt) am Innenradius Mittel zur Reduzierung des Innenradius vorgesehen sind. Erfindungsgemäß wird nunmehr dort die Kühlluft nicht achsparallel auf die Gehäuseoberfläche bzw. in den Rippenbereich geleitet, sondern mit einem zur Maschinenachse weisenden, also nach innen zur Maschinenachse gerichtetem Winkel auf die Oberfläche bzw. in den Kühlrippengrund gelenkt.

Dies wird durch entsprechend Konturen am axialen Ende der Haube erreicht. Vor Austritt aus der Haube wird die Kühlluft beispielsweise mittels einer Schrägung bzw. stetige Reduzierung des Innenradius, nach innen zum Kühlrippengrund gelenkt. Somit wird die Verweildauer der Kühlluft in den Kühlrippen wesentlich verlängert und die Kühlfunktion entlang der dem Gehäuse gesteigert.

Dies kann auch durch ein separates Reduzierelement erreicht werden, das am Ende der Haube positioniert wird. Dieses Reduzierelemente weist einen keilförmigen Querschnitt auf.

Dieses Reduzierelement ist in Umfangsrichtung betrachtet zumindest abschnittsweise vorhanden, insbesondere an den Abschnitten der Haube, die einer bevorzugten Kühlung bedürfen.

Die Haube ist im Wesentlichen topfförmig ausgestaltet, was die Montage und das Anbringen der Luftleitelemente und/oder der Reduzierelemente vereinfacht.

Wenn der Innenradius der Haube größer ist als der Außenradius des Gehäuses kann die Schrägung der Haube insbesondere auf den Rippen des Gehäuses aufsetzen.

Sofern das Gehäuse zumindest abschnittsweise mit Rippen versehen ist, kann dies die Kühlung verbessern, als auch zur mechanischen Stabilität der Luftleitelemente auf dem Gehäuse und an der Haube beitragen.

Erfindungsgemäß wird nunmehr die Kühlluft nicht achsparallel in den Rippenbereich geleitet, sondern mit einem zur Maschinenachse weisenden, also nach innen zur Maschinenachse gerichtetem Winkel in den Kühlrippengrund gelenkt wird.

Durch die Schrägung am Haubenende wird die Verweildauer der Kühlluft in den Kühlrippen wesentlich verlängert und die Kühlfunktion entlang der dem Gehäuse gesteigert.

Wenn nunmehr ergänzend noch mindestens ein Luftleitelement am Haubenaustritt vorgesehen ist, welches die Luftführung ebenfalls nach innen Richtung Maschinenachse lenkt wird der Kühleffekt noch verstärkt. Dabei wird im Betrieb des Lüfters - und damit der elektrodynamischen Maschine zusätzlich nach dem Prinzip eines Injektors radial von außen Frischluft angesaugt bzw. ein Zusatzkühlluftstrom generiert. Diese kühlere Luft, von außen kommend, wird vorzugsweise unter einem schrägen Winkel in den Kühlrippengrund gefördert und bringt eine erhebliche Verbesserung der Kühlfunktion, die sich bis auf die Antriebsseite (AS) auswirkt, so dass sich der axiale Temperaturgradient innerhalb der Maschine reduziert.

Dabei ist das Luftleitelement so ausgebildet, dass es vorzugsweise zu einer Vermischung mit der aus der Haube austretenden Kühlluft kommt. Damit steigert sich über die axiale Länge der Maschine betrachtet der Kühleffekt.

Durch den erfindungsgemäßen Aufbau der Haube und/oder die Luftleitelemente kann die Kühlfunktion erheblich gesteigert werden, indem eine längere Verweildauer der Kühlluft in den Gehäuserippen erreicht wird.

Die Temperatur des gesamten Motors wird abgesenkt. Das Temperaturdelta zwischen AS und BS wird reduziert. Wicklungs- und Lagertemperatur werden reduziert, wodurch Lebensdauer gewonnen wird. Der Wirkungsgrad der elektrodynamischen Maschine wird gesteigert.

Das Luftleitelement kann ebenso wie die Haube aus Metall oder aus Kunststoff geformt sein. Ebenso kann die Haube und/oder das Luftleitelement aus Spritzguss oder 3-D-Druck gefertigt werden.

Eine zusätzliche Abstützung des Luftleitelements am Gehäuse oder den Gehäuserippen verbessert die mechanische Stabilität, insbesondere wenn mehrere axial hintereinander angeordnete Luftleitelemente vorgesehen werden.

Die Erfindung sowie weitere vorteilhafte Ausgestaltungen der Erfindung werden anhand prinzipiell dargestellter Ausführungsbeispiel näher erläutert; darin zeigen:
- FIG 1: eine dynamoelektrische Maschine im Längsschnitt,
- FIG 2: eine Detaildarstellung
- FIG 3 bis 7: teilperspektivische Darstellungen
- FIG 8: Teillängsschnitt der dynamoelektrischen Maschine,
- FIG 9: Teilquerschnitt der dynamoelektrischen Maschine,
- FIG 10: perspektivische Darstellung einer dynamoelektrischen Maschine
- FIG 11: Draufsicht auf einen Teil einer dynamoelektrischen Maschine.

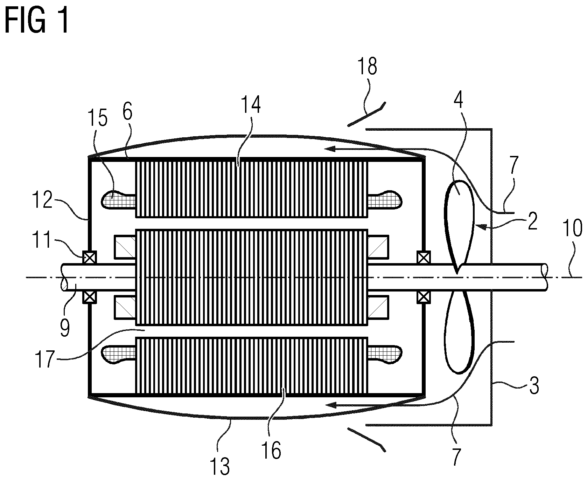

FIG 1 zeigt einen Längsschnitt einer prinzipiell dargestellten dynamoelektrischen rotatorischen Maschine 1, insbesondere eines Asynchronmotors mit Käfigläufer. Die dynamoelektrische Maschine 1 weist einen Stator 14 auf, der geblecht ausgeführt ist und an seinen Stirnseiten Wickelköpfe eines Wicklungssystems 15 aufweist. Der Stator 14 ist in einem Gehäuse 6 eingesetzt, insbesondere derart, dass ein Wärmeübergang vom Stator 14 auf das Gehäuse 6 erfolgt. Das Gehäuse 6 weist an seinem Außenumfang verteilt im Wesentlichen radial abstehende Rippen 13 auf, die der Kühlung der elektrischen Maschine 1 dienen.

Durch das bestromten Wicklungssystems 15 des Stators 14 tritt über einen Luftspalt 17 eine elektromagnetische Wechselwirkung mit einem Rotor 16 ein, aufgrund der sich eine Welle 9 in Drehung um eine Achse 10 versetzt. Die Welle 9 ist über Lager 11 und deren Lagerschild 12 am Gehäuse 6 positioniert. Auf der Welle 9 ist ein Lüfter 2 drehfest mit der Welle 9 verbunden. Dieser Lüfter 2 weist im Wesentlichen radial verlaufende Lüfterflügel 4 auf. Der Lüfter 2 saugt über Durchbrüche 5 einer Haube 3 axial einen Luftstrom an, der dann durch die Lüfterflügel 4 und mithilfe der Haube 3 umgelenkt wird, sodass sich ein Hauptkühlluftstroms 7 im Wesentlichen axial entlang den Rippen 13 einstellt.

Nach Austritt aus der Haube 3 entweicht jedoch Kühlluft allmählich radial aus dem Rippenbereich des Gehäuses 6 und verliert somit die Kühlfunktion. Der Verlust der Kühlluft nimmt dabei im axialen Verlauf entlang der Rippen 13 zur Antriebsseite stark zu, so dass der Anteil der Kühlluft, die auf der Antriebsseite noch eine Kühlwirkung entfaltet, sehr gering ist.

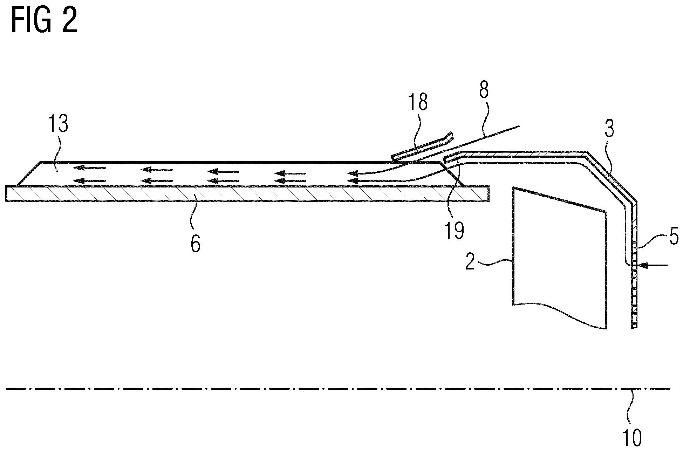

Diese vorzeitige Ablösung des Kühlluftstromes von der Gehäuseoberfläche wird nunmehr gemäß FIG 2 durch die Reduktion des Innenradius der Haube 3 an ihrem axialen Ende und/oder durch die Luftleitelemente 18 vermieden und dadurch die Kühlung wesentlich verbessert.

Die Reduktion des Innenradius am axialen Ende der Haube 3, kann auch durch ein zusätzlichen Reduzierelement geschaffen werden, das in bzw. an der Haube 3 positioniert ist. Im Querschnitt betrachtet ist dies Reduzierelement keilförmig ausgeführt.

Durch Luftleitelemente 18, die einstückig an der Haube 3 bereits vorhanden sind oder durch zusätzlich anbringbar sind, wird im Betrieb des Lüfters 2 ein Zusatzkühlluftstrom 8 erzeugt, der über die Öffnungen 21 an die Gehäuseoberfläche Und/oder zwischen die Rippen 13 strömt.

Auch bei einstückiger Haube 3 sind durch die Luftleitelemente 18 nur gewisse Winkelbereiche um die Haube 3 belegbar. Es gibt also Hauben 3, bei denen nur ein vorgebbarer Winkelbereich belegt ist, ebenso gibt es Hauben 3, bei denen Luftleitelemente 18, den ganzen Umfang belegen.

Bei in Umfangrichtung segmentierten separaten Luftleitelementen 18, sind diese an der Haube 3 und/oder am Gehäuse 6 positionierbar.

Das Luftleitelemente 18 weist axial verlaufende Stege 23 auf, an denen Luftleitflächen 26 angeordnet sind. Zwischen den Luftleitflächen 26 in axialer Richtung sind Öffnungen 21, die den Zusatzkühlluftstrom 8 im Betrieb der elektrodynamische rotatorische Maschine 1 ermöglichen. Die Luftleitflächen 26 folgen im Wesentlichen der Kontur des Gehäuses 6, mit anderen Worten, die Krümmung der jeweiligen Luftleitflächen 26 in Umfangsrichtung betrachtet, hat einen vom Durchmesser des Gehäuses 6 abhängigen Radius.

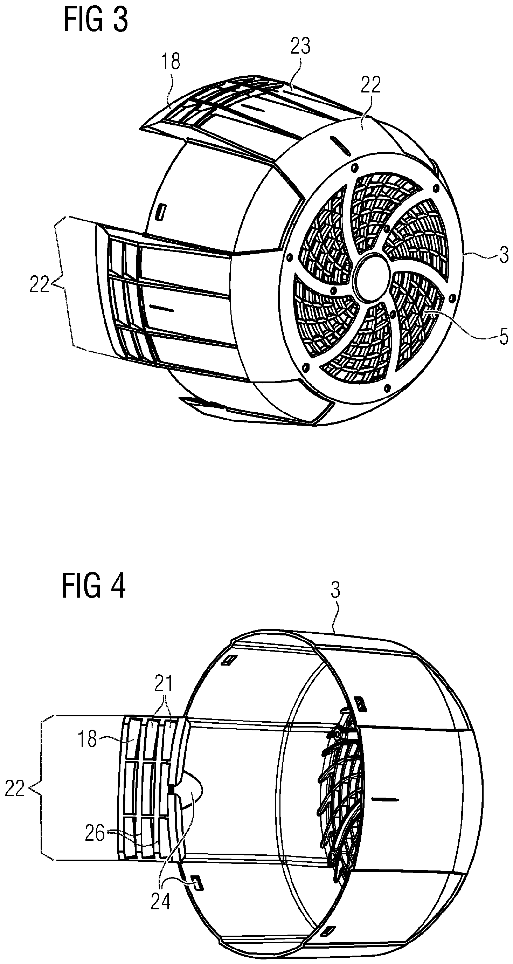

FIG 3 zeigt mehrere separate Luftleitelemente 18, die an der Haube 3 angeordnet sind. In Umfangrichtung sind dabei nicht alle Winkelbereiche belegt.

FIG 4 zeigt in einer weiteren Detaildarstellung die Haube 3, mit einem segmentierten Luftleitelement 18, das an der Haube 3 mittels einer beispielsweise lösbaren Clipverbindung in einer Ausnehmung der Haube 3 befestigt ist.

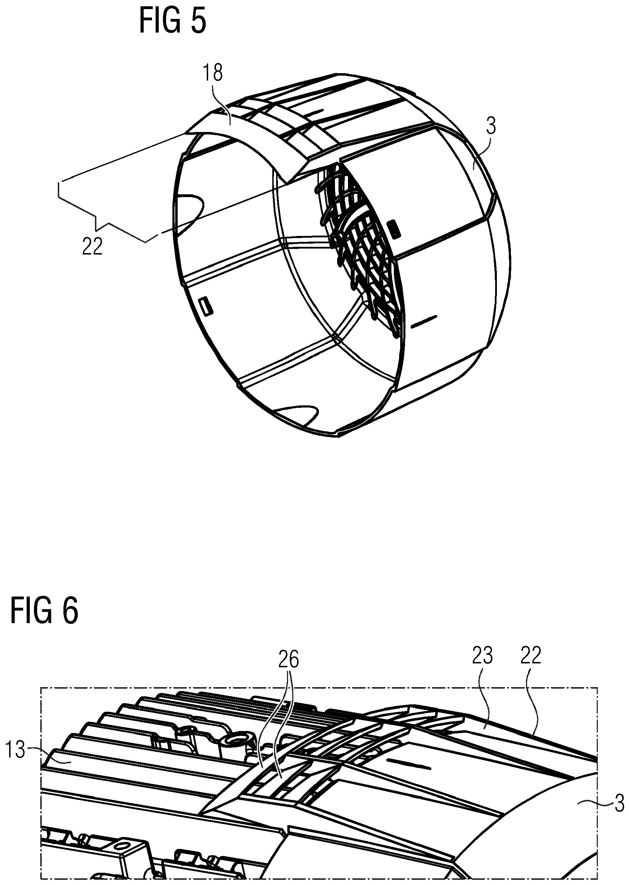

Die Stege 23 ragen dabei aus mechanischen und/oder strömungstechnischen Gründen axial in Richtung Belüftungsseite, wie dies insbesondere auch der FIG 5 zu entnehmen ist.

FIG 6 zeigt ein Segment eines Luftleitelements 18 an der Haube 3 mit zwei Reihen von jeweils drei axial hintereinander angeordnete Luftleitflächen 26, die zwischen axialem Haubenende und erster Luftleitfläche 26 bzw. zwischen den Luftleitflächen 26 Öffnungen 21 aufweisen.

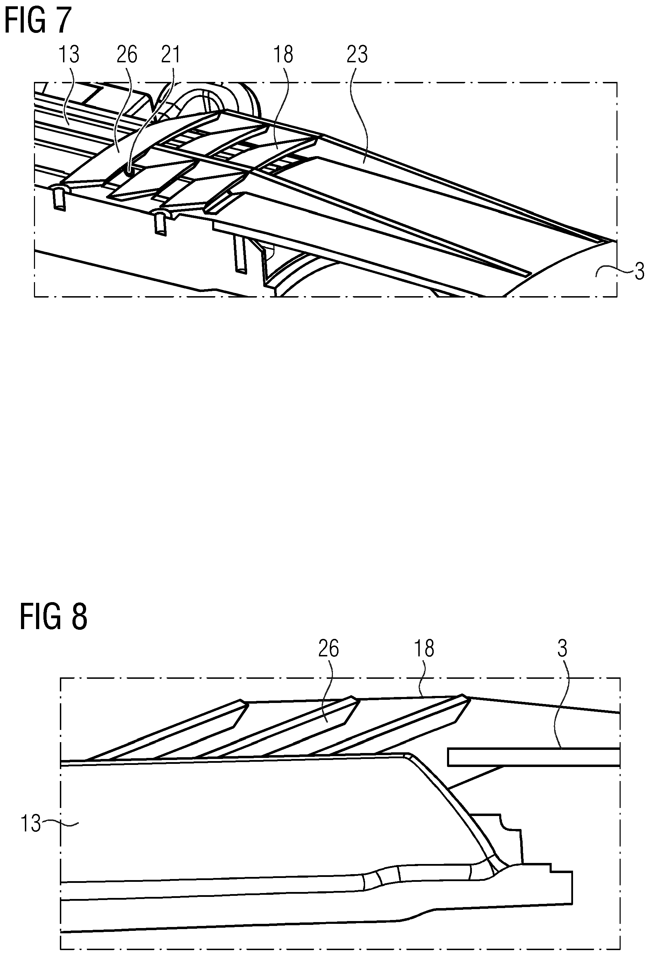

FIG 7 zeigt insbesondere den Neigungswinkel der Luftleitflächen 26 bzgl. der Achse 10. Dadurch ergibt sich die Injektorwirkung, so dass neben einem Hauptkühlluftstrom 7 eine Zusatzkühlluftstrom 8 generiert wird der zur Kühlung der Maschine 1 beiträgt.

Die Winkelstellung der Luftleitflächen 26 wird vorzugsweise bei der Herstellung der Haube 3 berücksichtigt, wenn Haube 3 und Luftleitelemente 18 einstückig ausgeführt sind, beispielswiese durch Spritzguss oder 3D-Druck.

Bei separater Herstellung der Luftleitelemente 18, die an die Haube 3 geclipst werden sollen, kann die Winkelstellung bei der Herstellung berücksichtigt werden. Durch die separaten Luftleitelemente 18 lassen sich diese auch austauschen, um somit axial längere Luftleitelemente 18 zu erhalten und/oder eine andere Winkelstellung der Luftleitflächen 26 zu erhalten.

FIG 8 zeigt prinzipiell, wie die segmentierten Luftleitelemente 18 an der Haube 3 befestigbar sind, indem beispielsweise ein Haken in eine Ausnehmung am axialen Ende der Haube 3 eingreift. Die Luftleitflächen 26 liegen auf den Rippen 3 auf oder sind von ihnen geringfügig beabstandet. Die Stege 23 liegen auf der Haube 3 auf.

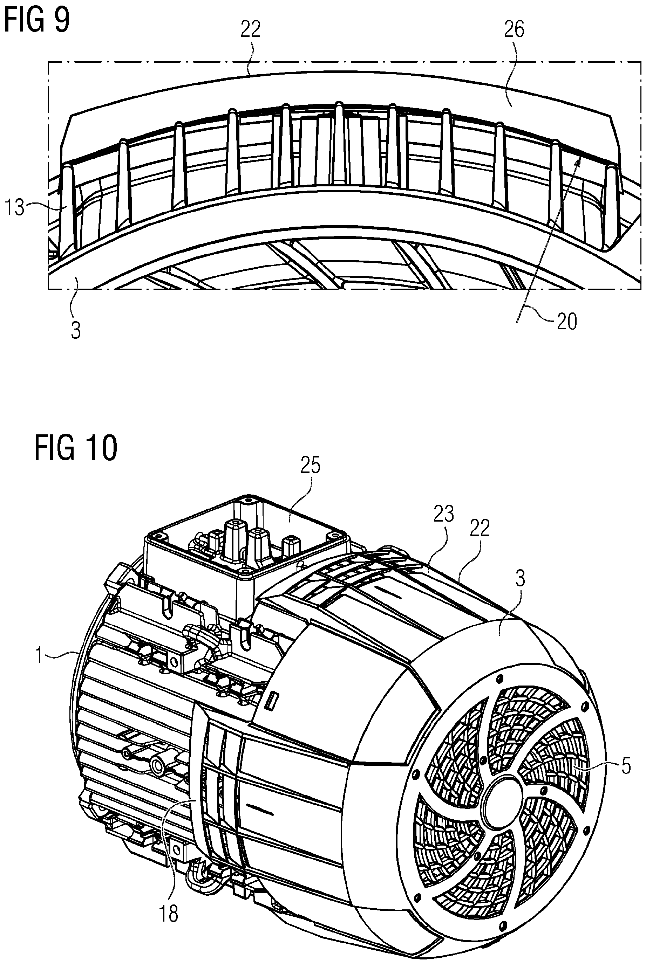

Die Auflage der Luftleitflächen 26 auf den Rippen ist auch der FIG 9 zu entnehmen.

FIG 10 zeigt eine Haube 3 mit Luftleitelemente 18, wobei ein Winkelsegment an der Haube 3 durch das Luftleitelement 18 nicht belegt ist.

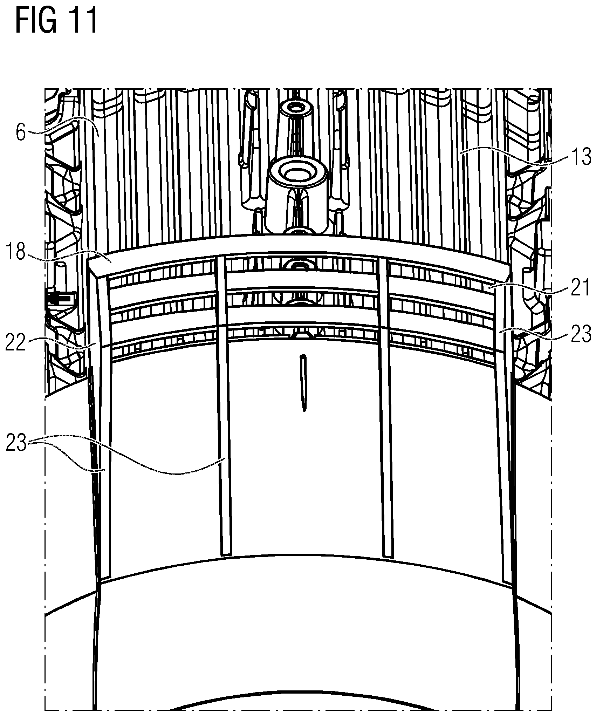

FIG 11 zeigt in Draufsicht ein Luftleitelement 18 an der Haube 3 und einen Abschnitt der dynamoelektrischen Maschine 1 mit dem zu kühlenden Gehäuses 6 bzw. den Rippen 13.

## Patentansprüche

1. Elektrodynamische rotatorische Maschine (1) mit Eigenlüftung, mit einem Gehäuse (6), das die rotatorische Maschine (1) zumindest abschnittsweise axial umgibt, wobei die elektrodynamische rotatorische Maschine (1) eine Antriebsseite und eine Belüftungsseite aufweist, wobei auf der Belüftungsseite zumindest ein Lüfter (2) mit einer Welle (9) drehfest verbunden ist, und bei Rotation dieser Welle (9) um eine Achse (10) einen Hauptluftstrom (7) generiert, wobei der Lüfter (2) mit einer Haube (3) versehen ist, die den durch den Lüfter (2) generierten Hauptkühlluftstrom (7) auf das Gehäuse (6) lenkt, wobei an der Haube (3) Mittel vorgesehen sind, um die zumindest die Kühlung des Gehäuses zu verbessern, wobei diese Mittel zumindest ein Luftleitelement (18) aufweisen, das einen Zusatzkühlluftstrom (8) bereitstellt, **dadurch ge**- **kennzeichnet** , dass das Luftleitelement (18) in Umfangrichtung betrachtet segmentiert aufgebaut ist und mit der Haube (3) lösbar befestigt ist, wobei die Haube (3) und das oder die Luftleitelemente (18) separate Teile sind, die je nach thermischem Bedarf der elektrischen Maschine (1) nachträglich an der Haube (3) anbringbar sind.

2. Elektrodynamische rotatorische Maschine (1) mit Eigenlüftung nach Anspruch 1, **dadurch gekennzeich-net**, dass das Luftleitelement (18) Stege (23) mit dazwischen befindlichen Luftleitflächen (26) aufweist, wobei sich zwischen den Luftleitflächen (26) Öffnungen (21) befinden.

3. Elektrodynamische rotatorische Maschine (1) mit Eigenlüftung nach Anspruch 2, **dadurch gekennzeich-**n e t, dass die Luftleitflächen (26) bzgl. der Achse (10) schräg verlaufen.

4. Elektrodynamische rotatorische Maschine (1) mit Eigenlüftung nach Anspruch 1, **dadurch gekennzeich-**n e t, dass die Segmente der Luftleitelemente (18) axial unterschiedliche Ausdehnungen und/oder unterschiedliche Anzahl von Öffnungen (21) aufweisen.

5. Elektrodynamische rotatorische Maschine (1) mit Eigenlüftung nach Anspruch 1 oder 4, **dadurch gekenn**- **zeichnet**, dass axial entlang des Gehäuses (6) mehrere der segmentierten Luftleitelemente (18) anordenbar sind.

6. Elektrodynamische rotatorische Maschine (1) mit Eigenlüftung nach einem oder mehreren der vorhergehenden Ansprüche, **dadurch gekennzeichnet , dass** am axialen Ende der Haube (3) am Innenradius Mittel zur Reduzierung des Innenradius vorgesehen sind.

7. Elektrodynamische rotatorische Maschine (1) mit Eigenlüftung nach Anspruch 6, **dadurch gekennzeich** - n e t, dass in Umfangsrichtung zumindest abschnittsweise ein Reduzierelement am axialen Ende der Haube (3) vorhanden ist oder dass das Ende der Haube (3) radial zur Achse (10) geneigt ist.

8. Elektrodynamische rotatorische Maschine (1) mit Eigenlüftung nach einem oder mehreren der vorhergehenden Ansprüche, **dadurch gekennzeichnet , dass** die Haube (3) im Wesentlichen topfförmig ausgestaltet ist.

9. Elektrodynamische rotatorische Maschine (1) mit Eigenlüftung nach einem oder mehreren der vorhergehenden Ansprüche, **dadurch gekennzeichnet , dass** der Innenradius der Haube (3) größer ist als der Außenradius des Gehäuses (6).

10. Elektrodynamische rotatorische Maschine (1) mit Eigenlüftung nach einem oder mehreren der vorhergehenden Ansprüche, **dadurch gekennzeichnet , dass** das Gehäuse (6) zumindest abschnittsweise mit Rippen (13) versehen ist.

## Claims

1. Self-ventilated electrodynamic rotary machine (1) having a housing (6) which at least partially axially encloses the rotary machine (1), wherein the electrodynamic rotary machine (1) has a drive side and a ventilation side, wherein on the ventilation side at least one fan (2) is connected in a rotationally fixed manner to a shaft (9) and generates a main air flow (7) when said shaft (9) rotates about an axis (10), wherein the fan (2) is provided with a cover (3) which directs the main cooling air flow (7) generated by the fan (2) onto the housing (6), wherein means are provided on the cover (3) for at least improving the cooling of the housing, wherein these means have at least one air guide element (18) which provides an additional cooling air flow (8), **characterised in that** the air guide element (18), viewed in the circumferential direction, is of segmented design and is detachably fixed to the cover (3), wherein the cover (3) and the air guide element(s) (18) are separate parts that can be retrofitted to the cover (3) depending on the thermal requirements of the electrical machine (1).

2. Self-ventilated electrodynamic rotary machine (1) according to claim 1, **characterised in that** the air guide element (18) has ridges (23) with air guide surfaces (26) located therebetween, wherein openings (21) are located between the air guide surfaces (26).

3. Self-ventilated electrodynamic rotary machine (1) according to claim 2, **characterised in that** the air guide surfaces (26) are angled with respect to the axis (10).

4. Self-ventilated electrodynamic rotary machine (1) according to claim 1, **characterised in that** the segments of the air guide elements (18) have axially different extents and/or different numbers of openings (21).

5. Self-ventilated electrodynamic rotary machine (1) according to claim 1 or 4, **characterised in that** a plurality of the segmented air guide elements (18) can be disposed axially along the housing (6).

6. Self-ventilated electrodynamic rotary machine (1) according to one or more of the preceding claims, **characterised in that** means for reducing the inner radius are provided on the inner radius at the axial end of the cover (3).

7. Self-ventilated electrodynamic rotary machine (1) according to claim 6, **characterised in that** a reducing element is provided at least in some sections in the circumferential direction at the axial end of the cover (3) or that the end of the cover (3) is inclined radially to the axis (10).

8. Self-ventilated electrodynamic rotary machine (1) according to one or more of the preceding claims,
**characterised in that** the cover (3) is essentially pot-shaped.

9. Self-ventilated electrodynamic rotary machine (1) according to one or more of the preceding claims, **characterised in that** the inner radius of the cover (3) is larger than the outer radius of the housing (6).

10. Self-ventilated electrodynamic rotary machine (1) according to one or more of the preceding claims, **characterised in that** at least some sections of the housing (6) are provided with fins (13).

## Revendications

1. Machine (1) électrodynamique tournante à ventilation propre, comprenant une enveloppe (6), qui entoure axialement la machine (1) tournante au moins par endroit, dans laquelle la machine (1) électrodynamique tournante a un côté d'entraînement et un côté de ventilation, dans laquelle du côté de la ventilation au moins un ventilateur (2) est solidaire en rotation d'un arbre (9) et crée à la rotation de cet arbre (9) autour d'un axe (10) un courant (7) d'air principal, dans laquelle le ventilateur (2) est pourvu d'une hotte (3) qui dévie sur l'enveloppe (6) le courant d'air (7) de refroidissement principal créé par le ventilateur (2), dans lequel il est prévu sur la hotte (3) des moyens pour améliorer au moins le refroidissement de l'enveloppe, dans laquelle ces moyens ont au moins un élément (18) de conduite de l'air, qui donne un courant (8) d'air de refroidissement supplémentaire, **caractérisé en ce que** l'élément (18) de conduite de l'air est constitué, considéré dans la direction du pourtour, de manière segmentée et est fixé de manière amovible avec la hotte (3), dans laquelle la hotte (3) est le ou les éléments (18) de conduite de l'air sont des parties distinctes, qui, suivant les besoins thermiques de la machine (1) électrique, peuvent être mis ultérieurement sur la hotte (3).

2. Machine (1) électrodynamique tournante à ventilation propre, suivant la revendication 1, **caractérisée en ce que** l'élément (18) de conduite de l'air a des entretoises (23) avec des surfaces (26) de conduite de l'air se trouvant entre elles, dans laquelle des ouvertures (21) se trouvent entre les surfaces (26) de conduite de l'air.

3. Machine (1) électrodynamique tournante à ventilation propre, suivant la revendication 2, **caractérisée en ce que** les surfaces (26) de conduite de l'air s'étendent de manière inclinés par rapport à l'axe (10).

4. Machine (1) électrodynamique tournante à ventilation propre, suivant la revendication 1, **caractérisée en ce que** les segments des éléments (18) de conduite de l'air ont des étendues différentes axialement et/ou un nombre différent d'ouvertures (21).

5. Machine (1) électrodynamique tournante à ventilation propre, suivant la revendication 1 ou 4, **caractérisée en ce que** plusieurs des éléments (18) de conduite de l'air segmenté peuvent être montés axialement le long de l'enveloppe (6).

6. Machine (1) électrodynamique tournante à ventilation propre, suivant l'une des revendications précédentes, **caractérisée en ce qu'**à l'extrémité axiale de la hotte (3) sont prévus sur le rayon intérieur des moyens de réduction du rayon intérieur.

7. Machine (1) électrodynamique tournante à ventilation propre, suivant la revendication 6, **caractérisée en ce que** dans la direction du pourtour est prévu au moins par endroit un élément réducteur à l'extrémité axiale de la hotte (3) ou en ce que l'extrémité de la hotte (3) est inclinée radialement par rapport à l'axe (10).

8. Machine (1) électrodynamique tournante à ventilation propre, suivant l'une ou plusieurs des revendications précédentes, **caractérisée en ce que** la hotte (3) est conformée sensiblement en forme de pot.

9. Machine (1) électrodynamique tournante à ventilation propre, suivant l'une ou plusieurs des revendications précédentes, **caractérisée en ce que** le rayon intérieur de la hotte (3) est plus grand que le rayon extérieur de l'enveloppe (6).

10. Machine (1) électrodynamique tournante à ventilation propre, suivant l'une ou plusieurs des revendications précédentes, **caractérisée en ce que** l'enveloppe (6) est pourvue au moins par endroit de nervures (13).
